(19)
Europäisches Patentamt
European Patent Office
Office européen des brevets

(11) Veröffentlichungsnummer : **0 375 871 B1**

(12) # EUROPÄISCHE PATENTSCHRIFT

(45) Veröffentlichungstag der Patentschrift :
**15.01.92 Patentblatt 92/03**

(51) Int. Cl.5 : **B60H 1/00,** G05D 23/24

(21) Anmeldenummer : **89119576.0**

(22) Anmeldetag : **21.10.89**

(54) **Klimatisierungssystem für ein Fahrzeug.**

(30) Priorität : **24.12.88 DE 3843898**

(43) Veröffentlichungstag der Anmeldung :
**04.07.90 Patentblatt 90/27**

(45) Bekanntmachung des Hinweises auf die Patenterteilung :
**15.01.92 Patentblatt 92/03**

(84) Benannte Vertragsstaaten :
**DE FR GB IT**

(56) Entgegenhaltungen :
**EP-A- 0 004 970**
**EP-A- 0 026 612**
**US-A- 3 692 100**

(56) Entgegenhaltungen :
**PATENT ABSTRACTS OF JAPAN vol. 7, no. 55 (M-198)(1200) 5 März 1983, & JP-A-57 201713 (TOYOTA) 10 Dezember 1982,**
**PATENT ABSTRACTS OF JAPAN vol. 5, no. 72 (M-68)(744) 14 Mai 1981, & JP-A-56 21911 (DIESEL KIKI) 28 Februar 1981,**

(73) Patentinhaber : **Dr.Ing.h.c. F. Porsche Aktiengesellschaft**
**Porschestrasse 42**
**W-7000 Stuttgart 40 (DE)**

(72) Erfinder : **Petri, Horst, Dipl.-Ing. (FH)**
**Kelterstrasse 10**
**W-7251 Weissach-Flacht (DE)**
Erfinder : **Mönig, Michael, Dipl.-Ing. (FH)**
**Hohweg 10**
**W-7254 Hemmingen (DE)**

**EP 0 375 871 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein Klimatisierungssystem gemäß dem Oberbegriff des Anspruchs 1.

Fahrzeuge sind häufig mit einem Klimatisierungssystem ausgestattet, welches einem Fahrgastraum einen Luftstrom steuerbarer Temperatur zuführt. Das Klimatisierungssystem steuert diese Temperatur (Ausblastemperatur) so, daß eine Abweichung einer über einen Innenraumtemperaturfühler ermittelten Innentemperatur des Fahrgastraums von einer vorgebbaren Solltemperatur minimal wird (Innentemperaturregelung). Ein derartiges Klimatisierungssystem ist Bestandteil einer in der DE-A13836991 beschriebenen Klimaanlage.

Der Innenraumtemperaturfühler ist hierbei häufig in einem Steuergerät für das Klimatisierungssystem integriert, welches in einer Schalttafel des Fahrzeugs angeordnet ist ; er ist dort in einem kleinen, nach dem Fahrgastraum hin offenen, zwangsbelüfteten Kanal untergebracht.

Derartige Fahrzeuge werden jedoch außer in einer normalerweisen geschlossenen Bauweise mit festen Dach auch noch in einer offenen oder öffenbaren Bauweise (Cabriolet) gebaut. Wird ein derartiges Cabriolet mit geöffnetem Verdeck gefahren, so kann dies zu Störungen des Klimatisierungssystems (zu hohe Ausblastemperaturen der aus Ausströmern des Klimatisierungssystems in den Fahrgastraum strömenden Luft) führen, sofern der Innenraumtemperaturfühler durch ungünstige Luftströmungen bzw. -verwirbelungen im Fahrzeug mit kalter Umgebungsluft beaufschlagt wird.

Aus der JP-A-57201713 ist eine Klimatisierungseinrichtung für ein Fahrzeug bekannt, bei der eine Schalteinrichtung einen Zustand einer geöffneten Karosserieöffnung des Fahrzeugs, beispielsweise einer Tür oder einem Fenster, erfaßt. In Abhängigkeit von einem Signal der Schalteinrichtung entscheidet eine Steuerung, ob das Klimatisierungssystem auf Heizung oder Kühlung umgeschaltet werden soll.

Es ist daher Aufgabe der Erfindung, ein Klimatisierungssystem der eingangs genannten Art zu schaffen, welches die genannten Störungen bei geöffnetem Fahrzeug vermeidet.

Diese Aufgabe wird durch die kennzeichnenden Merkmale des Anspruchs 1 gelöst. Weitere, die Erfindung in vorteilhafter Weise ausgestaltende Merkmale sind in den Unteransprüchen enthalten.

Die Vorteile sind in erster Linie darin zu sehen, daß mit einfachen Mitteln ein wirksames Klimatisierungssystem für ein Fahrzeug mit verschließbaren Karosserieöffnungen geschaffen ist, welches bei geschlossenen sowie bei geöffneten Karosserieöffnungen eine gute Behaglichkeit im Fahrgastraum erreicht und insbesondere zu hohe Ausblastemperaturen der in den Fahrgastraum strömenden Luft vermeidet.

Hierzu wird im Fahrzeug eine Schalteinrichtung vorgesehen, welche einen Zustand einer geöffneten Karosserieöffnung erfaßt und in diesem Zustand eine Umschaltung des Klimatisierungssystems von Innenraumtemperaturregelung auf Ausblastemperatursteuerung bewirkt. Die Schalteinrichtung ist hierbei als ein manuell zu betätigender Schalter ausgeführt oder als ein Endlagenschalter, welcher von einem die Karosserieöffnung verschließenden Bauteil betätigt wird.

Da (elektronische) Steuergeräte von Klimatisierungssystemen bestehender Fahrzeuge häufig nicht einfach um einen weiteren Schalteingang erweitert werden können, ist es auch möglich, die Schalteinrichtung als Softwaremodul zu realisieren. Dieses bildet dann den Zustand des geöffneten oder geschlossenen Fahrzeugs aus Fühlersignalen nach, indem aus der Ausblastemperatur und wenigstens der Drehzahlstufe oder der Fahrzeuggeschwindigkeit oder der Außentemperatur einen Grenzwert für die zeitliche Änderung der Temperaturabweichung der Innenraumtemperatur ti von der Solltemperatur ts (Mindestsolländerung) ermittelt und dieser Grenzwert mit einer zeitlichen Änderung der Temperaturabweichung der Innenraumtemperatur von der Solltemperatur verglichen wird ; bei Unterschreiten der Mindestsolländerung wird die Umschaltung des Klimatisierungssystems von Innenraumtemperaturregelung auf Ausblastemperatursteuerung bewirkt.

Vorzugsweise erfolgt der Vergleich nur bei in höheren Temperaturbereichen liegenden Ausblastemperaturen. Die Umschaltung wird nur dann bewirkt, wenn die zeitliche Änderung der Temperaturabweichung die Mindestsolländerung über mindestens eine vorgegebene Zeitspanne unterschreitet. Hierbei kann bei Ausblastemperatursteuerung ein Sollwert für die Ausblastemperatur virtuell um einen festgesetzten Betrag erhöht werden.

Ebenso ist denkbar, die vom Innenraumtemperaturfühler gemessene Innenraumtemperatur auf ihre zeitliche Änderung hin zu überwachen und das Klimatisierungssystem von Innenraumtemperaturregelung auf Ausblastemperatursteuerung zu schalten, sofern die gemessene Innenraumtemperatur starken zeitlichen Schwankungen unterliegt. Hierbei sollte wiederum die Umschaltung nur bei Ausblastemperaturen in einem oberen Temperaturbereich erfolgen und nur dann, wenn die starken zeitlichen Schwankungen der gemessenen Innenraumtemperatur über mindestens eine vorgegebene Zeitspanne auftreten.

Die Erfindung wird nachstehend anhand der in den Zeichnungen dargestellten Ausführungsbeispiele erläutert.

Es zeigt :

Fig. 1 ein Blockschaltbild eines Klimatisierungssystems,

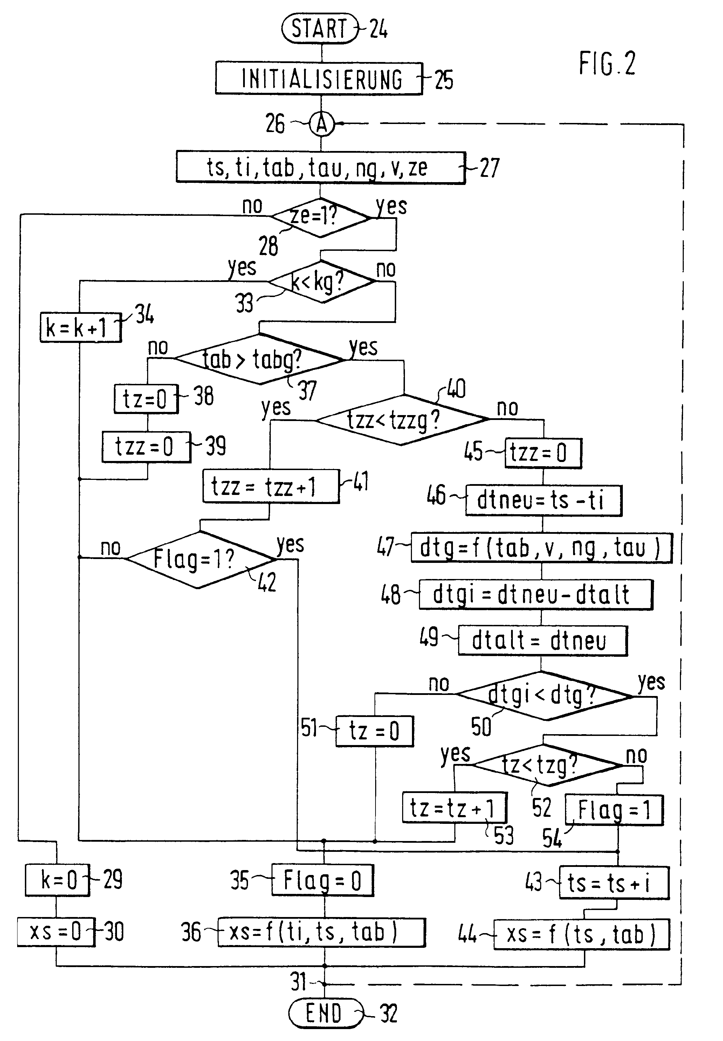

Fig. 2 ein Flußdiagramm eines Steuerablaufs des Klimatisierungssystems.

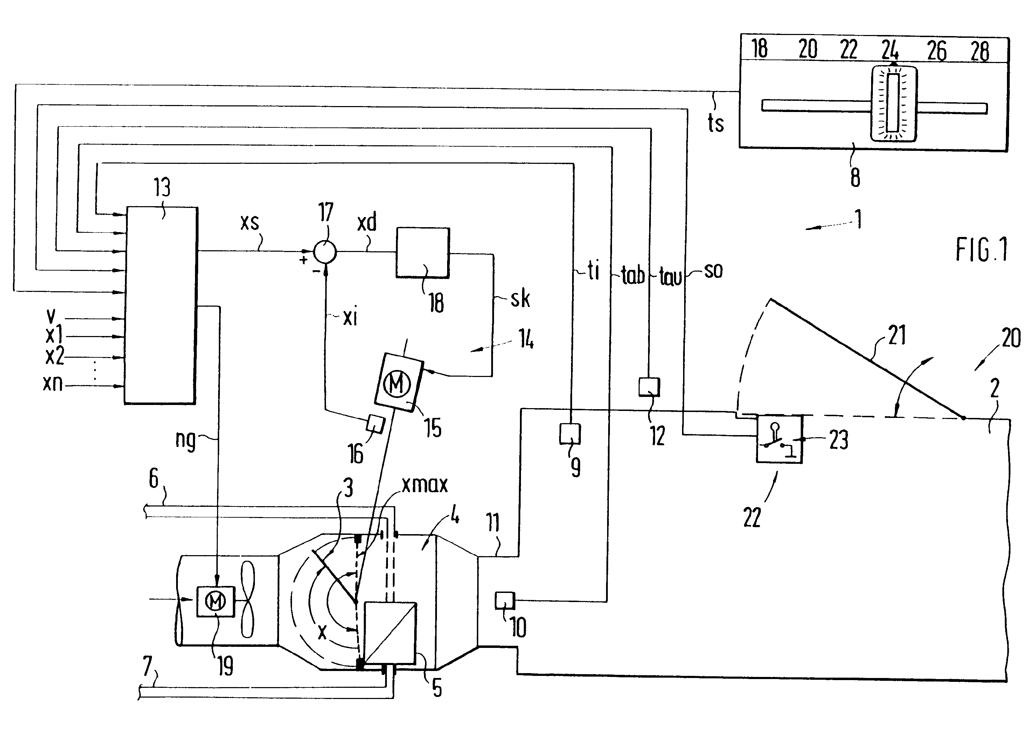

In Fig. 1 ist mit 1 ein Fahrzeug-Klimatisierungssystem mit selbsttätiger Temperaturregelung — ohne Beschränkung der Allgemeinheit — am Beispiel einer luftseitig geregelten Heizung gezeigt. Die Beheizung eines Fahrgastraums 2 wird hierbei von einer Temperaturmischklappe 3 als Stellelement beeinflußt, welche den dem Fahrgastraum 2 zugeführten Luftstrom in einer Temperaturmischkammer 4 entweder vollständig oder teilweise durch einen Wärmetauscher 5 führt oder an diesem teilweise oder vollständig vorbeileitet. Der Wärmetauscher 5 wird hierbei über eine Zulaufleitung 6 und eine Rücklaufleitung 7 mit einem Wärmeträgermedium beaufschlagt.

Über eine Sollwertvorgabeeinheit 8 kann die Solltemperatur ts für die Innenraumtemperatur ti vorgegeben werden. Aus dieser Solltemperatur ts und der Innenraumtemperatur ti im Fahrgastraum 2, welche mittels eines Temperaturfühlers 9 erfaßt wird und einer über einen Ausblastemperaturfühler 10 in einem Ausblaskanal 11 bestimmten Ausblastemperatur tab und eventuell weiteren Eingangssignalen x1, x2,....,xn, sowie beispielsweise der über einen Außentemperaturfühler 12 gemessenen Außentemperatur tau usw. ermittelt ein Steuergerät 13 eine Sollstellung xs des Stellelements Temperaturmischklappe 3.

Ein Stellungsregelkreis 14 mit einem Stellmotor 15 stellt die Stellung x der Temperaturmischklappe 3 entsprechend der Sollstellung xs ein ; hierzu wird die Iststellung xi der Temperaturmischklappe 3 mittels eines Positionsdetektors 16 erfaßt. Ein Vergleicher 17 vergleicht die Sollstellung xs und die Iststellung xi (Regeldifferenz xd = xs − xi) ; aus der Regeldifferenz xd wird schließlich vom Regler mit Steuerelektronik 18 ein Ansteuersignal sk für den Stellmotor 15 bereitgestellt. Dieser Stellungsregelkreis kann selbstverständlich auch im Steuergerät 13 integriert sein. Dieses wird dann zusätzlich mit der Iststellung xi beaufschlagt und erzeugt seinerseits direkt das Ansteuersignal sk. Das Klimatisierungssystem 1 umfaßt ferner noch einen drehzahlsteuerbaren Lüfter 19, welcher den Fahrgastraum zwangsbelüftet und vom Steurgerät 13 (in Abhängigkeit einer vorgegebenen Drehzahlstufe ng) angesteuert wird.

Erfindungsgemäß wird nun eine Stellung einer verschließbaren Karosserieöffnung 20, beispielsweise eines Cabrioletverdecks 21, mittels einer Schalteinrichtung 22 (Endlagenschalter 23) ausgestattet, welche entweder die gechlossene Stellung oder die vollständig geöffnete Stellung des Verdecks 20 abtastet und ein Schaltsignal so an das Steuergerät 13 abgibt. Hierfür kann selbstverständlich auch ein Endlagenschalter einer elektrischen Cabrioletsteuerung mitverwendet werden. Es kann sich hierbei jedoch auch um einen manuell zu betätigenden Schalter handeln, welcher in einer Schalttafel des Fahrzeugs untergebracht ist und von einer Bedienperson bei geöffnetem Fahrzeug betätigt wird.

Aufgrund dieses Schaltsignals so ändert das Steuergerät 13 seine Steuerphilosophie von innentemperaturregelung xs = f(ti, ts, tab), d.h., Sollstellung xs der Temperaturmischklappe als Funktion von Innentemperatur ti und Solltemperatur ts (und Ausblastemperatur tab), auf Ausblastemperatursteuerung xs = f(ts, tab), d.h., Sollstellung xs als Funktion von Solltemperatur xs und Ausblastemperatur tub allein. Hierzu kann es sinnvoll sein, die Solltemperatur ts von der Sollwertvorgabeeinheit 8 virtuell im Steuergerät um ein bestimmtes Temperaturinkrement i zu erhöhen.

Selbstverständlich kann die hier gezeigte Klimatisierungsvorrichtung auch bei wasserseitig geregelten Heizungen eingesetzt werden. Ein bevorzugter Anwendungsfall sind jedoch luftseitig geregelte Heizungssysteme, bei denen die zum Beheizen notwendige Energie dem Abgas der — insbesondere luftgekühlten — und nicht gezeigten Brennkraftmaschine entnommen wird. Der Vorlauf 6 entspricht dann einem Abgasrohr der Brennkraftmaschine, der Rücklauf 7 entfällt und der Austritt des Wärmeträgermediums Abgas aus dem Wärmetauscher 5 endet im Auspuffsystem oder im Freien.

Soll dagegen ein bestehendes Klimatisierungssystem, dessen Steuergerät 13 nicht ohne weiteres um einen zusätzlichen Schalteingang erweitert werden kann, um eine eine derartige Umschaltung bewirkende Schalteinrichtung erweitert werden, wobei hier angenommen ist, daß das Steuergerät bereits Eingänge für eine Fahrzeuggeschwindigkeit v (eines nicht gezeigten Fahrzeuggeschwindigkeitsgebers) und/oder für die Außentemperatur tau aufweist, so kann die Schalteinrichtung auch mittels eines Steuerprogramms für einen Mikrorechner des Steuergeräts 13 realisiert werden. Dies ist anhand des Flußdiagramms 2 gezeigt.

Nach einem Programmstart 24 erfolgt, sofern es sich hierbei um ein eigenständiges Programm zur Temperatursteuerung handelt, eine Rechnerinitialisierung 25 ; diese kann jedoch entfallen, sofern das Programm als Unterprogramm in ein Hauptprogramm einer Klimaanlage, beispielsweise nach der DE-P 38 36 991, eingebunden ist.

Nach Passieren einer Marke A, 26, werden Meßwerte für die Solltemperatur ts, die Innentemperatur ti, die Ausblastemperatur tab, evtl. noch der Außentemperatur tau, der Drehzahlstufe ng des Lüfters 19 und der Fahrzeuggeschwindigkeit v ermittelt und ein Zündsignal ze einer Brennkraftmaschine erfaßt, 27. Es wird abgefragt, ob das Zündsignal ze vorhanden ist, 28 ; wenn nein, wird eine Zählgröße k zu Null gesetzt, 29, und die Sollstellung xs = 0 ausgegeben, 30 und über den Verzweigungspunkt 31 zur Marke A, 26 zurückgekehrt (selbständiges Programm, gestrichelt gezeichnet) oder zum Programmende 32 fortgeschritten (Unterprogramm).

Ist die Abfrage 28 positiv, so wird geprüft, 33, ob der Zählerstand k einen Grenzwert kg noch nicht erreicht hat ; dieser Zähler dient der Überwachung eines Kaltstartvorgangs, währenddessen die Innentemperaturregelung beibehalten werden kann (optional). Ist die Bedingung 33 erfüllt, so wird der Zähler k inkrementiert, 34, ein Flag zu Null gesetzt, 35 und die Temperaturregelphilosophie 36, wie sie beispielsweise beim Porsche-Typ 964 eingesetzt ist, bestimmt, und zum Verzweigungspunkt 31 fortgeschritten.

Ist die Abfrage 33 negativ, so wird geprüft, 37, ob die Ausblastemperatur tab größer als ein Grenzwert tabg ist. Wenn nein, wird eine Zählgröße tz (erster Zeitzähler, zur Bestimmung der Zeit, während der die Umschaltung unterdrückt wird) und eine Zählgröße tzz (Meßzeit) zu Null gesetzt, 38 und 39 und mit Programmschritt 35 fortgefahren.

Ist die Abfrage 37 positiv, so wird geprüft, ob die Zählgröße tzz noch kleiner als ein Grenzwert tzzg ist (Meßzeit noch nicht erreicht), 40 ; wenn ja, wird die Zählgröße tzz inkrementiert, 41 und abgefragt, ob das Flag gesetzt ist, 42 ; ist das Flag nicht gesetzt, wird mit Programmschritt 35 fortgefahren, ist es gesetzt, so wird die Solltemperatur ts um ein Inkrement erhöht (beispielsweise um 2°C), 43, der Sollwert xs entsprechend einer Steuerphilosophie zur Ausblastemperatursteuerung, wie sie ebenfalls beim oben genannten Fahrzeug bei Ausfall des Innenraumtemperaturfühlers realisiert ist, ausgegeben, 44, und zum Verzweigungspunkt 31 fortgeschritten.

Ist die Abfrage 40 negativ, so wird die Zählgröße tzz zu Null gesetzt, 45 und eine Temperaturdifferenz dtneu aus Solltemperatur ts und Innenraumtemperatur ti ermittelt, 46. Es wird ein Grenzwert für die zeitliche Änderung der Temperaturabweichung der Innentemperatur ti von der Solltemperatur ts aus der Ausblastemperatur tab, der Fahrgeschwindigkeit v, der Gebläsestufe ng sowie evtl. zusätzlich der Außentemperatur tau ermittelt, (Mindestsolländerung dtg = f(tab, v, ng, tau)) 47, und die zeitliche Änderung der Temperaturabweichung dtgi der Innentemperatur ti von der Solltemperatur ts bestimmt, 48, indem die Temperaturdifferenz dtneu mit einer im vorigen Berechnungsdurchgang ermittelten Temperaturdifferenz dtalt verglichen wird. Anschließend wird die Temperaturdifferenz dtalt auf den neu errechneten Wert dtneu gesetzt, 49.

Es wird abgefragt, 50, ob die zeitliche Änderung der Temperaturabweichung dtgi kleiner als die Mindestsolländerung dtg ist ; wenn nein, wird tz zu Null gesetzt, 51 und das Flag zu Null gesetzt, 35 und mit Programmschritt 36 fortgefahren (Verdeck zu, Innenraumtemperaturregelung). Ist die Abfrage 50 positiv, so wird geprüft, ob die Zählgröße tz kleiner als ein Grenzwert tzg ist, 52 ; wenn ja wird die Zählgröße tz inkementiert, 53 und mit Programmschritt 35 fortgefahren, wenn nein, (zeitliche Änderung der Temperaturabweichung dtgi unterschreitet Mindest-Solländerung über vorgegebene Zeitspanne), wird das Flag gesetzt, 54 und mit Programmschritt 43 fortgefahren (Verdeck auf, Ausblastemperatursteuerung).

Die Mindestsolländerung dtg = f(tab, v, ng, tau), 47 wird vorzugweise experimentell oder aus den physikalischen Gegebenheiten des Kraftfahrzeugs für die verschiedenen Parameter tab, v, ng, tau ermittelt und als Wertetabelle (Kennfeld) in einem Speicherbereich des Steuergeräts 13 abgelegt ; aus dieser oder aus einer mathematischen Beschreibung des funktionellen Zusammenhangs kann dann die Mindestsolländerung dtg für eine augenblickliche Wertekombination der Parameter tab, v, ng, tau ermittelt werden.

## Patentansprüche

1. Klimatisierungssystem für ein Fahrzeug mit verschließbaren Karosserieöffnungen (20), insbesondere einem öffen- und schließbaren Verdeck (21), wobei ein Fahrgastraum (2) des Fahrzeugs über einen über das Klimatisierungssystem (1) zugeführten Luftstrom mit steuerbarer Temperatur beheizbar ist und das Klimatisierungssystem (1) die Temperatur (tab) des Luftstroms so steuert (Ausblastemperatursteuerung), daß eine Abweichung einer über einen Innenraumtemperaturfühler (9) ermittelten Innenraumtemperatur (ti) des Fahrgastraums (2) von einer vorgebbaren Solltemperatur (ts) minimal wird (Innenraumtemperaturregelung), und wobei das Klimatisierungssystem (1) eine Schalteinrichtung (22, 24-14) umfaßt, welche einen Zustand einer geöffneten Karosserieöffnung (20, 21) des Fahrzeugs erfaßt, **dadurch gekennzeichnet**, daß die Schalteinrichtung (22, 24-14) in diesem Zustand eine Umschaltung des Klimatisierungssystems (1) von Innenraumtemperaturregelung (xs = f(ti, ts, tab), 36) auf AusblastemperaturSteuerung (xs = f(ts, tab), 44) bewirkt.

2. Klimatisierungssystem nach Anspruch 1, **dadurch gekennzeichnet,** daß die Schalteinrichtung (22) ein manuell zu betätigender Schalter ist.

3. Klimatisierungssystem nach Anspruch 1, **dadurch gekennzeichnet,** daß die Schalteinrichtung (22) ein von einem die Karosserieöffnung (20) verschließenden Bauteil (21) betätigter Endlagenschalter (23) ist.

4. Klimatisierungsystem nach Anspruch 1, wobei das Klimatisierungssystem ein Gebläse mit steuerbarer Drehzahlstufe und/oder einen Fahrzeug-Geschwindigkeitsgeber und/oder einen Außentemperaturfühler und-

/oder einen Ausblastemperaturfühler umfaßt, **dadurch gekennzeichnet,** daß die Schalteinrichtung (24-54) aus der Ausblastemperatur (tab) und wenigstens der Drehzahlstufe (ng) oder der Fahrzeuggeschwindigkeit (v) oder der Außentemperatur (tau) oder beiden einen Grenzwert für eine zeitliche Änderung der Temperaturabweichung der Innenraumtemperatur (ti) von der Solltemperatur (ts) ermittelt (Mindest Solländerung dtg = f(tab, v, ng, tau), 47) und mit einer zeitlichen Änderung der Temperaturabweichung (dtgi, 48) der Innenraumtemperatur (ti) von der Solltemperatur (ts) vergleicht und bei Unterschreiten der Mindest- Solländerung (dtg, 50) die Umschaltung des Klimatisierungssystems (1) von innenraumtemperaturregelung (xs = f(ti, ts, tab), 36) auf Ausblastemperatursteuerung (xs = f(ts,tab), 44) bewirkt.

5. Klimatisierungssystem nach Anspruch 4, **dadurch gekennzeichnet,** daß der Vergleich (50) nur bei Ausblastemperaturen (tab) in einem oberen Temperaturbereich (tab > tabg, 37) erfolgt.

6. Klimatisierungssystem nach Anspruch 4 oder 5, **dadurch gekennzeichnet,** daß die Umschaltung (50) nur dann erfolgt, wenn die zeitliche Änderung der Temperaturabweichung (dtgi, 48) die Mindest- Solländerung (dtg) über mindestens eine vorgegebene Zeitspanne (tz > tzg, 52) unterschreitet.

7. Klimatisierungssystem nach wenigstens einem der vorangehenden Ansprüche, **dadurch gekennzeichnet,** daß bei Ausblastemperatursteuerung (xs = f(ts, tab), 44) ein Sollwert (ts) für die Ausblastemperatur (tab) virtuell um einen festgesetzten Betrag (i) erhöht wird (43).

8. Klimatisierungssystem nach Anspruch 1, **dadurch gekennzeichnet,** daß die vom Innenraumtemperaturfühler (9) gemessene Innenraumtemperatur (ti) auf ihre zeitliche Änderung hin überwacht und das Klimatisierungsystem (1) von innenraumtemperaturregelung (xs = f(ti, ts, tab)) auf Ausblastemperatursteuerung (xs = f(ts, tab)) umgeschaltet wird, sofern die gemessene Innenraumtemperatur (ti) starken zeitlichen Schwankungen unterliegt.

9. Klimatisierungssystem nach Anspruch 8, **dadurch gekennzeichnet,** daß die Umschaltung nur bei Ausblastemperaturen (tab) in einem oberen Temperaturbereich (tab > tabg) erfolgt.

10. Klimatisierungssystem nach Anspruch 8 oder 9, **dadurch gekennzeichnet,** daß die Umschaltung nur dann erfolgt, wenn die starken zeitlichen Schwankungen der gemessenen Innenraumtemperatur (ti) über mindestens eine vorgegebene Zeitspanne (tz > tzg) auftreten.

## Claims

1. An air-conditioning system for a vehicle with closable body openings (20), in particular an openable and closable top (21), a passenger space (2) of the vehicle being heatable via an air current with controllable temperature, supplied via the air-conditioning system (1), and the air-conditioning system (1) controlling the temperature (tab) of the air current (discharge temperature control) in such a manner that any deviation of an interior-space temperature (ti) of the passenger space (2), determined via an interior-space temperature sensor (9), from a predeterminable nominal temperature (ts) is minimised (interior-space temperature regulation), and the air-conditioning system (1) comprising a switching device (22, 24-54) which detects when a body opening (20, 21) of the vehicle is in the opened state, characterised in that, in this state, the switching device (22, 24-54) effects a switching of the air-conditioning system (1) from interior-space temperature regulation (xe = f(ti, ts, tab), 36) to discharge temperature control (xs = f(ts, tab), 44).

2. An air-conditioning system according to Claim 1, characterised in that the switching device (22) is a manually operated switch.

3. An air-conditioning system according to Claim 1, characterised in that the switching device (22) is a limit switch (23) operated by a structural part (21) which closes the body opening (20).

4. An air-conditioning system according to Claim 1, the air-conditioning system comprising a fan with a controllable rotational-speed stage and/or a vehicle speed detector and/or an outside temperature sensor and/or a discharge temperature sensor, characterised in that, from the discharge temperature (tab) and at least the rotational-speed stage (ng) or the vehicle speed (v) or the outside temperature (tau) or both, the switching device (24-54) determines a limit value for a temporal variation of the temperature deviation of the interior-space temperature (ti) from the nominal temperature (ts) (minimum nominal variation dtg = f(tab, v, ng, tau), 47) and compares it with a temporal variation of the temperature deviation (dtgi, 48) of the interior-space temperature (ti) from the nominal temperature (ts) and, where it falls below the minimum nominal variation (dtg, 50), effects the switching of the air-conditioning system (1) from interior-space temperature regulation (xs = f(ti, ts, tab), 36) to discharge temperature control (xs = f(ts,tab), 44).

5. An air-conditioning system according to Claim 4, characterised in that the comparison (50) only takes place at discharge temperatures (tab) in an upper temperature range (tab > tabg, 37).

6. An air-conditioning system according to Claim 4 or 5, characterised in that the switching (50) only takes place when the temporal variation of the temperature deviation (dtgi, 48) falls below the minimum nominal variation (dtg) over at least a predetermined space of time (tz > tzg, 52).

7. An air-conditioning system according to at least one of the preceding claims, characterised in that, in the case of discharge temperature control (xs = f(ts, tab), 44), a nominal value (ts) for the discharge temperature (tab) is virtually increased by a fixed amount (i) (43).

8. An air-conditioning-system according to Claim 1, characterised in that the interior-space temperature (ti) measured by the interior-space temperature sensor (9) is monitored as to its temporal variation and the air-conditioning system (1) is switched from interior-space temperature regulation (xs = f(ti, ts, tab)) to discharge temperature control (xs = f(ts, tab)), provided that the measured interior-space temperature (ti) is subject to strong temporal fluctuations.

9. An air-conditioning system according to Claim 8, characterised in that the switching only takes place at discharge temperatures (tab) in an upper temperature range (tab > tabg).

10. An air-conditioning system according to Claim 8 or 9, characterised in that the switching only takes place if the strong temporal fluctuations of the measured interior-space temperature (ti) occur over at least a predetermined time interval (tz > tzg).

**Revendications**

1. Système de conditionnement d'air pour un véhicule comprenant des ouvertures (20) de sa carrosserie qui peuvent être fermées, notamment un toit (21) qui peut être ouvert ou fermé, l'habitacle à passagers du véhicule pouvant être chauffé par un courant d'air envoyé par un système de conditionnement d'air (1) selon une température réglable, et le système de conditionnement d'air (1) commandant la température (tab) du courant d'air (commande de la température de soufflage), de manière qu'une déviation d'une température intérieure de l'habitacle à passagers (2) déterminée par un détecteur de température d'habitacle (9) soit minimale par rapport à une température de consigne (ts) pouvant être prédéterminée (régulation de la température d'habitacle) et dans lequel le système de conditionnement d'air (1) comprend un dispositif de commutation (22, 24-54) qui détecte l'état d'une ouverture (20, 21) de la carrosserie du véhicule qui est ouverte, caractérisé en ce que le dispositif de commutation (22, 24-54) détermine dans cet état une commutation du système de conditionnement d'air (1) entre la régulation de la température d'habitacle (xs = f(ti, ts, tab), 36) et la commande de la température de soufflage (xs = f(ts, tab), 44).

2. Système de conditionnement d'air selon la revendication 1, caractérisé en ce que le dispositif de commutation (22) est un commutateur actionné à la main.

3. Système de conditionnement d'air selon la revendication 1, caractérisé en ce que le dispositif de commutation (22) est constitué par un interrupteur de fin de course (23) actionné par un élément (21) qui ferme l'ouverture (20) de la carrosserie.

4. Système de conditionnement d'air selon la revendication 1, dans lequel le système de conditionnement d'air comprend une soufflante à étage de vitesse de rotation commandable et/ou un détecteur de vitesse du véhicule et/ou un détecteur de la température extérieure et/ou un détecteur de la température de soufflage, caractérisé en ce que le dispositif de commutation (2454) détermine à partir de la température de soufflage (tab) et au moins l'étage de vitesse de rotation (ng) ou la vitesse (v) du véhicule ou la température extérieure (tau) ou les deux une valeur limite pour une modification dans le temps de la déviation de la température de l'habitacle (ti) par rapport à la température de consigne (ts) (modification de consigne minimale dtg = f(tab, v, ng, tau), 47), la compare à une modification dans le temps de la déviation de la température (dtgi, 48) de la température d'habitacle (ti) par rapport à la température de consigne et détermine la commutation du système de conditionnement d'air (1) entre la, régulation de la température d'habitacle (xs = f(ti, ts, tab), 36) et la température de commande de soufflage (xs = f(ts, tab), 44) quand on passe au-dessous de la modification de consigne minimale (dtg, 50).

5. Système de conditionnement d'air selon la revendication 4, caractérisé en ce que la comparaison (50) n'a lieu que pour des températures de soufflage (tab) qui sont situées dans une plage de températures élevées (tab > tabg, 37).

6. Système de conditionnement d'air selon la revendication 4 ou 5, caractérisé en ce que la commutation (50) ne s'effectue que lorsque la modification dans le temps de la déviation de la température (dtgi, 48) passe au-dessous de la modification de consigne minimale (dtg) pendant au moins un laps de temps prédéterminé (tz > tzg, 52).

7. Système de conditionnement d'air selon l'une quelconque des revendications précédentes, caractérisé en ce que pendant la commande de la température de soufflage (xs = f(ts, tab), 44), une valeur de consigne (ts) de la température de soufflage (tab) est augmentée (43) virtuellement d'une valeur déterminée (i).

8. Système de conditionnement d'air selon la revendication 1, caractérisé en ce que la température d'habitacle (ti) mesurée par le détecteur de température d'habitacle (9) est surveillé en ce qui concerne sa modification dans le temps et le système de conditionnement d'air (1) est commuté de la régulation de la température d'habitacle (xs = f(ti, ts, tab)), à la commande de la température de soufflage (xs = f(ts, tab)) dans la mesure où la température d'habitacle (ti) qui est mesurée subit de fortes modifications dans le temps.

9. Système de conditionnement d'air selon la revendication 8, caractérisé en ce que la commutation n'a lieu que pour des températures de soufflage (tab) situées dans une plage de températures élevées (tab > tabg).

10. Système de conditionnement d'air selon la revendication 8 ou 9, caractérisé en ce que la commutation n'a lieu que lorsque les fortes modifications dans le temps de la température d'habitacle (ti) qui a été mesurée apparaissent pendant au moins un laps de temps prédéterminé (tz > tzg).

FIG.1
18
20
22
24
26
28
8
1
20
2
21
23
22
ts
so
tau
tab
ti
12
9
10
11
sk
14
18
15
16
xd
xi
17
xmax
4
5
3
x
xs
13
ng
19
6
7
v
x1
x2
xn

FIG.2
START
24
INITIALISIERUNG
25
26
A
ts, ti, tab, tau, ng, v, ze
27
ze=1?
28
no
yes
k<kg?
33
yes
no
k=k+1
34
tab > tabg?
37
no
yes
tz=0
38
tzz=0
39
tzz<tzzg?
40
yes
no
tzz=tzz+1
41
tzz=0
45
dtneu=ts-ti
46
Flag=1?
42
no
yes
dtg=f(tab, v, ng, tau)
47
dtgi=dtneu-dtalt
48
dtalt=dtneu
49
dtgi<dtg?
50
no
yes
tz=0
51
tz<tzg?
52
yes
no
tz=tz+1
53
Flag=1
54
k=0
29
xs=0
30
Flag=0
35
xs=f(ti, ts, tab)
36
ts=ts+i
43
xs=f(ts, tab)
44
31
END
32